# EUROPEAN PATENT APPLICATION

(11) **EP 2 765 803 A1**
(43) Date of publication of application: **13.08.2014**
(21) Application number: 14154090.6
(22) Date of filing: 06.02.2014
(51) Int. Cl.: H04W 36/00, H04W 36/06

(54) **Resource allocation method and apparatus for use in wireless communication system**

(30) Priority: 06.02.2013 KR 20130013218
(71) Applicant: Samsung Electronics Co., Ltd, Gyeonggi-do 443-742 (KR)
(72) Inventor: Hwang, Keunchul, 443-742 Gyeonggi-do (KR); Kang, Heewon, 443-742 Gyeonggi-do (KR); Kim, Jongkyung, 443-742 Gyeonggi-do (KR)
(74) Representative: Nederlandsch Octrooibureau

(57) **Abstract**

A resource allocation method and apparatus are provided for allocating resources for handover between sectors of a cell with handover latency. A resource allocation method of a base station in a wireless communication system includes receiving a handover request message from a terminal for handover from a first sector to a second sector within a cell and transmitting an allocation message for allocating a Mobile Allocation Index Offset (MAIO) to the terminal, the MAIO being identical to an MAIO used in the first sector. The resource allocation method and apparatus are advantageous in preventing a voice break occurring due to handover latency caused by signaling between the base station and the terminal in inter-sector handover.

## Description

### BACKGROUND

### 1. Field of the Invention

The present invention generally relates to a resource allocation method and apparatus for use in a wireless communication system, and particularly, the present invention relates to a method and apparatus for allocating resources for handover (Ho) between sectors of a cell with handover latency.

### 2. Description of the Related Art

Mobile communication systems have been developed to provide subscribers with communication service while on the move. With the rapid advance of technologies, mobile communication system have evolved to a level capable of providing high speed data communication services as well as voice communication services.

In the mobile communication system, handover is a process of handing over control of a terminal from one base station to another for maintaining calls in progress. Particularly, in the Global System for Mobile Communications (GSM), handover is classified into one of intra-cell handover, inter-cell handover, inter-Base Station Controller (BSC) handover, and inter-Mobile Switching Center (MSC) handover.

Strictly speaking, intra-cell handover is the operation of switching between channels or changing data rate from full-rate to half-rate or vice versa within a cell. Inter-cell handover is the handover occurring most frequently for the mobile terminal. In GSM, a sector forms an independent cell, and thus inter-cell handover includes inter-sector handover. Inter-BSC handover is the handover between BSCs, and inter-MSC handover is the handover between MSCs which occurs at a lower frequency, as compared to inter-cell handover.

In the case of inter-cell handover, however, when the terminal moves from one sector to another, the handover latency caused by the signaling between a base station and a terminal results in a voice break, which may last as long as the handover latency.

### SUMMARY

The present invention has been made to address the above problems and disadvantages and to provide at least the advantages described below. Accordingly, an aspect of the present invention provides a resource allocation method and apparatus that is capable of avoiding a voice break caused by handover signaling.

Another aspect of the present invention provides a resource allocation method and apparatus that is capable of simplifying a handover signaling procedure by applying a Mobile Allocation Index Offset (MAIO) dynamically to the inter-cell handover, particularly, to the inter-sector handover.

In accordance with an aspect of the present invention, a resource allocation method of a base station in a wireless communication system is provided. The resource allocation method includes receiving a handover request message from a terminal for handover from a first sector to a second sector within a cell and transmitting an allocation message for allocating a Mobile Allocation Index Offset (MAIO) to the terminal, the MAIO being identical to an MAIO used in the first sector.

In accordance with another aspect of the present invention, a resource allocation method of a base station in a wireless communication system is provided. The resource allocation method includes receiving an initial access request message from a terminal through one sector of a cell and transmitting an allocation message for allocating a Mobile Allocation Index Offset (MAIO) to the terminal, the MAIO being identical to an MAIO used in another sector of the cell.

In accordance with another aspect of the present invention, a resource allocation method for a terminal in a wireless communication system is provided. The resource allocation method includes transmitting, at the terminal, a handover request message to a base station for handover from a first sector to a second sector within a cell and receiving an allocation message for allocating a Mobile Allocation Index Offset (MAIO) from the base station, the MAIO being identical to an MAIO used in the first sector.

In accordance with another aspect of the present invention, a resource allocation method for a terminal in a wireless communication system is provided. The resource allocation method includes transmitting, at the terminal, an initial access request message to a base station through one sector of a cell and receiving an allocation message for allocating a Mobile Allocation Index Offset (MAIO) from the base station, the MAIO being identical to an MAIO used in another sector of the cell.

In accordance with another aspect of the present invention, a base station for allocating resources in a wireless communication system is provided. The base station includes a transceiver which transmits and receives data to and from a terminal and a controller which controls receiving a handover request message from a terminal for handover from a first sector to a second sector within a cell and transmitting an allocation message for allocating a Mobile Allocation Index Offset (MAIO) to the terminal, the MAIO being identical to an MAIO used in the first sector.

In accordance with another aspect of the present invention, a base station for allocating resources in a wireless communication system is provided. The base station includes a transceiver which transmits and receives data to and from a terminal and a controller which controls receiving an initial access request message from a terminal through one sector of a cell and transmitting an allocation message for allocating a Mobile Allocation Index Offset (MAIO) to the terminal, the MAIO being identical to an MAIO used in another sector of the cell.

In accordance with another aspect of the present invention, a terminal being allocated resources in a wireless communication system is provided. The terminal includes a transceiver which transmits and receives data to and from a base station and a controller which controls transmitting, at the terminal, a handover request message to a base station for handover from a first sector to a second sector within a cell and receiving an allocation message for allocating a Mobile Allocation Index Offset (MAIO) from the base station, the MAIO being identical to an MAIO used in the first sector.

In accordance with still another aspect of the present invention, a terminal being allocated resources in a wireless communication system is provided. The terminal includes a transceiver which transmits and receives data to and from a base station and a controller which controls transmitting, at the terminal, an initial access request message to a base station through one sector of a cell and receiving an allocation message for allocating a Mobile Allocation Index Offset (MAIO) from the base station, the MAIO being identical to an MAIO used in another sector of the cell.

### BRIEF DESCRIPTION OF THE DRAWINGS

The above and other aspects, features, and advantages of embodiments of the present invention will be more apparent from the following detailed description taken in conjunction with the accompanying drawings, in which:
FIG. 1 is a diagram illustrating cellular architecture for explaining frequency distribution in a conventional hard frequency reuse scheme;
FIG. 2 is a diagram illustrating cellular architecture for explaining frequency distribution in a conventional fractional frequency reuse scheme;
FIG. 3 is a diagram explaining application of MAIOs to the sectors of a cell operating with a conventional fractional reuse scheme;
FIG. 4 is a diagram explaining the problem of inter-sector handover in an inter-sector synchronization system; and
FIG 5 is a diagram explaining the inter-sector handover procedure according to an embodiment of the present invention.

### DETAILED DESCRIPTION OF EMBODIMENTS OF THE PRESENT INVENTION

Embodiments of the present invention are described in detail with reference to the accompanying drawings. Detailed description of well-known functions and structures incorporated herein may be omitted to avoid obscuring the subject matter of the present invention.

The GSM system is a Frequency Division Duplex (FDD) system using different frequency bands for uplink and downlink and employs a mix of Frequency Division Multiple Access (FDMA) and Time Division Multiple Access (TDMA). In the GSM system, the frequency reuse scheme for operating the mobile network is classified into one of a hard reuse and a fractional reuse.

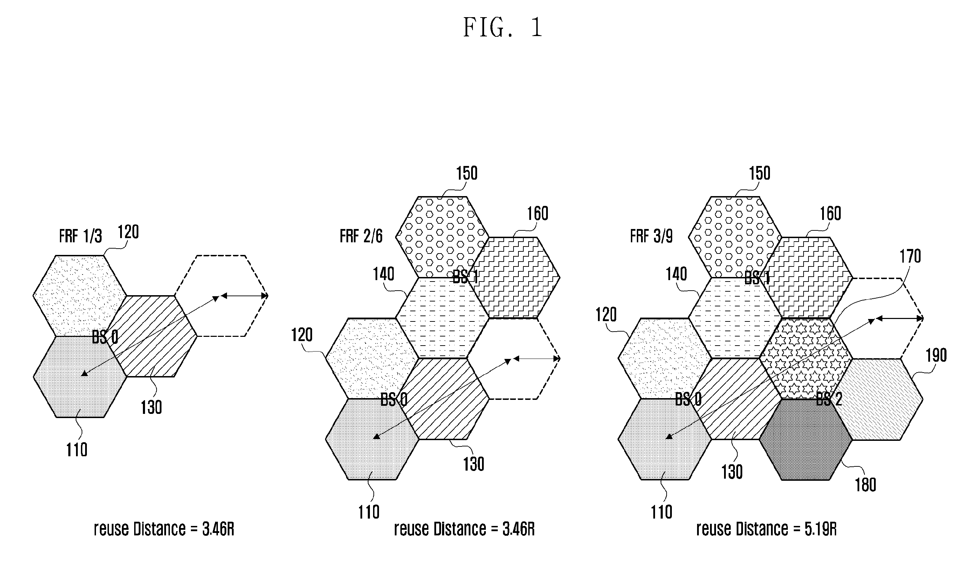

FIG. 1 is a diagram illustrating cellular architecture for explaining frequency distribution in the conventional hard frequency reuse scheme. In FIG. 1, reference numbers 110, 120, 130, 140, 150, 160, 170, 180 and 190 denote cells using different frequencies.

As shown in FIG. 1, the hard frequency reuse scheme generates a reuse pattern by assigning different frequencies to the sectors/cells. This reuse pattern is used all over the network.

At this time, a Broadcast Control CHannel (BCCH) carrier that does not use frequency hopping is planned with a Frequency Reuse Factor of 4/12, and a Traffic CHannel (TCH) carrier using the frequency hopping is planned with FRF of 3/9. In FRF X/Y, X denotes a cell(site) reuse factor and Y denotes a sector reuse factor.

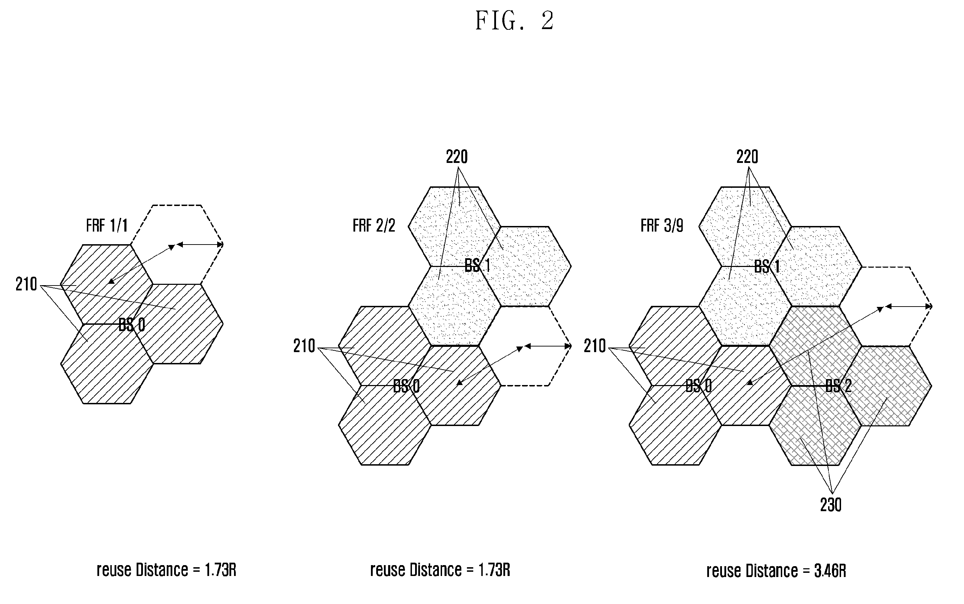

FIG. 2 is a diagram illustrating cellular architecture for explaining frequency distribution in a conventional fractional frequency reuse scheme. In FIG. 2, reference numbers 210, 220, and 230 denote sets of cells using the same frequency.

As shown in FIG. 2, the fractional frequency reuse scheme assigns the frequency to the sectors/cells in an overlapping manner, but allocates the frequency to the users dynamically without overlap. For this, a reuse pattern is generated and is used repeatedly all over the network.

Typically, FRF 1/1, FRF 2/2, and FRF 3/3 are used in consideration of the frequency bandwidth assigned to the network carrier and number of users to be supported in the sector/cell.

Meanwhile, the GSM system operates in a configuration of three sectors per base station, and typically the sectors (1/2/3-sector) operating under the control of one Base Transceiver Station (BTS) follows the system where the synchronization among sectors is secured.

In this case, it is possible to apply the fractional frequency reuse scheme which makes it possible to acquire synchronization (slot boundary, slot number, and frame number) among the sectors within the cell and allow the sectors to operate without frequency overlap. That is, the fractional frequency reuse scheme is applicable when the synchronization among the sectors is acquired but not when synchronization fails to be acquired due to the frequency overlap problem.

When allocating frequency to the terminals across sectors in the fractional reuse scheme, frequency separation is achieved with MAIO for frequency hopping. If different MAIOs are used, this means that the frequency hopping is applied without overlap, resulting in avoidance of frequency overlap problem.

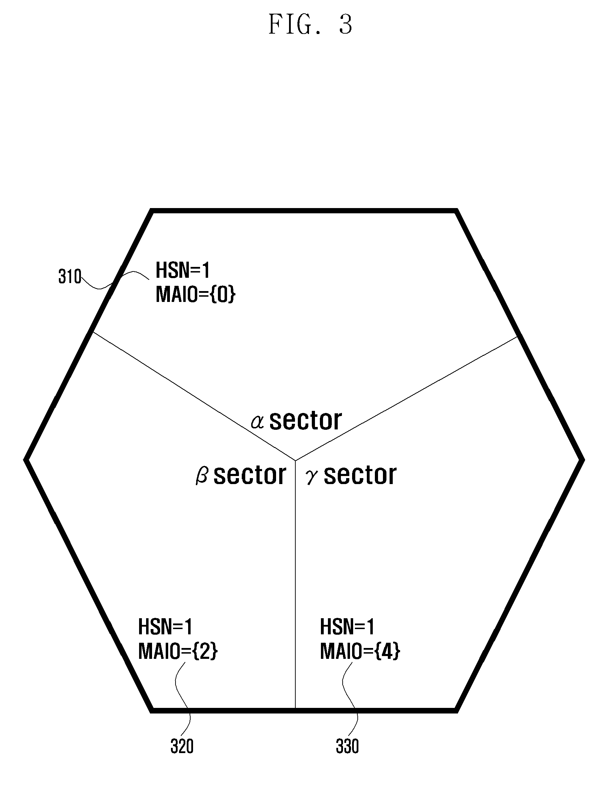

FIG. 3 is a diagram explaining application of MAIOs to the sectors of a cell operating with a conventional fractional reuse scheme.

As shown in FIG. 3, the conventional fractional reuse scheme allocates the fixed MAIOs to the corresponding sectors as denoted by reference numbers 310, 320, and 330. This guarantees the avoidance of frequency overlap among the sectors.

Table 1 shows MAIO allocation to sectors in the cell using the fractional reuse scheme as shown in FIG. 3.

**Table 1**

| Frame # | 0 | 1 | 2 | 3 | 4 | 5 | 6 | 7 | 8 | 9 | 10 | 11 |
|---|---|---|---|---|---|---|---|---|---|---|---|---|
| Alpha | 13 | 10 | 15 | 21 | 15 | 15 | 20 | 18 | 11 | 29 | 31 | 17 |
| Beta | 17 | 13 | 18 | 29 | 18 | 18 | 27 | 21 | 15 | 36 | 10 | 20 |
| Gamma | 20 | 17 | 21 | 36 | 21 | 21 | 31 | 29 | 18 | 11 | 13 | 27 |

The fractional reuse scheme assigns the same frequency set to the sectors to acquire synchronization among the sectors. It is possible to avoid interference among the sectors by applying same Hopping Sequence Number (HSN) along with different MAIOs (see Table 1).

Allocating different MAIOs to the respective sectors makes it possible to avoid frequency overlap among the sectors; however, if a terminal having a call in progress moves between the sectors, there is a need of changing the MAIO, and the inter-sector handover signaling may cause a voice break problem.

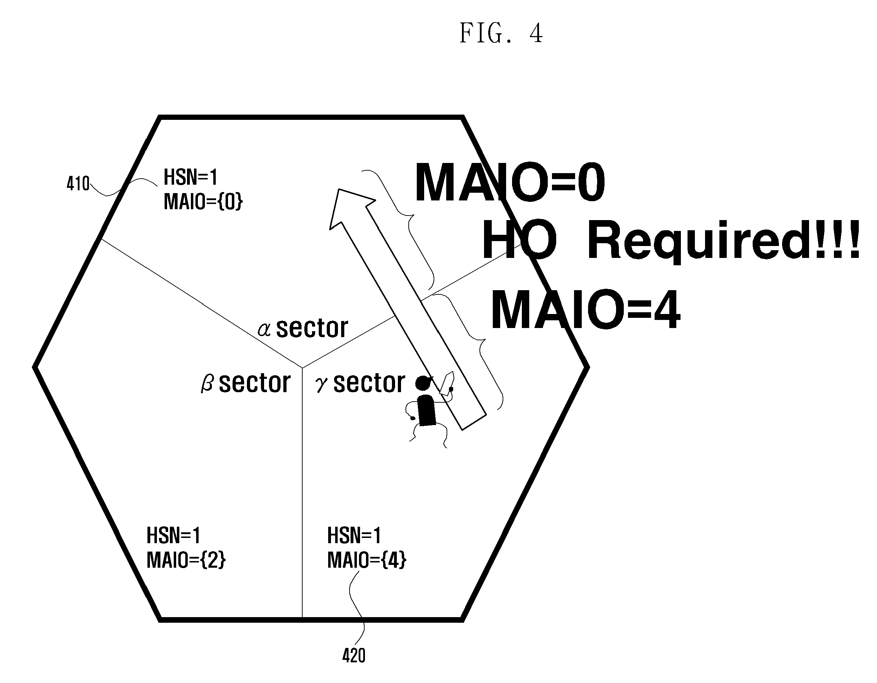

FIG. 4 is a diagram explaining the problem of the conventional method. The inter-sector handover according to the conventional method has a problem in that the signaling between the base station and the terminal for the handover causes handover latency, resulting in a voice break, which lasts as long as the handover latency.

In order to solve this problem, the present invention provides a method for maintaining the call in progress by negating the handover signaling for inter-cell handover.

In order to achieve this, the following assumptions are made:

1) It is possible to allocate the same MAIO to all sectors of the same base station.

2) For a terminal requiring inter-sector HO, the target sector can reserve the time slot and MAIO used by the serving section. Even when the time slot and MAIO are preoccupied, it is possible to snatch the corresponding time slot and MAIO forcibly.

3) The serving sector can terminate transmission/reception operations at the time when inter-sector HO is required, and the target sector can start the transmission/reception operation with the same time slot and MAIO as the serving sector.

Through the above procedure, it is possible to achieve seamless handover without extra signaling between the base station and the terminal for handover, resulting in avoidance of the voice break.

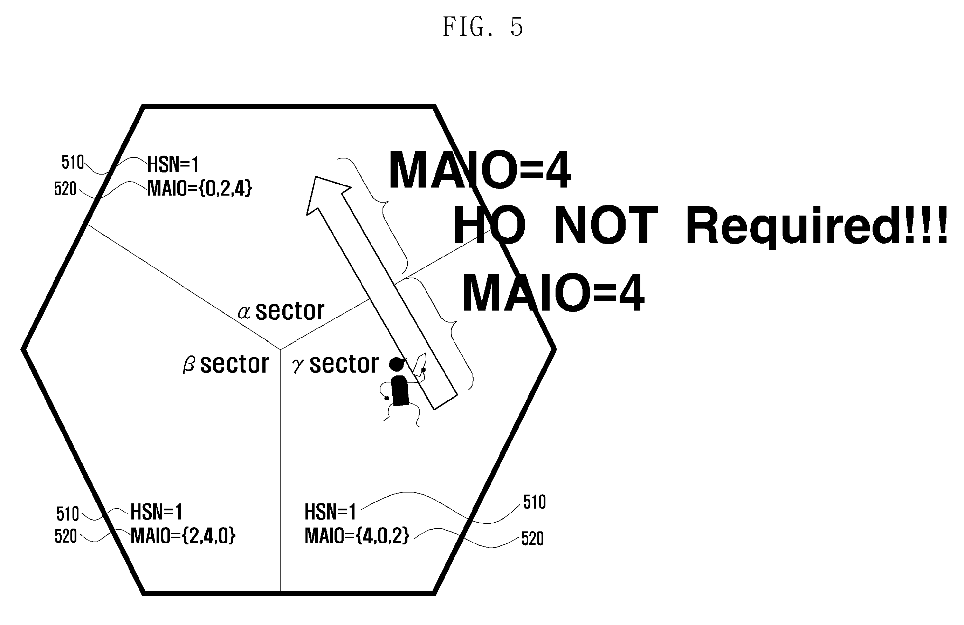

FIG 5 is a diagram explaining the inter-sector handover procedure according to an embodiment of the present invention.

According to an embodiment of the present invention, the sectors of a cell are allocated the same HSN 510 and the same MAIO set 520. In this case, there is no need for requesting a change of the MAIO allocation even when the terminal having a call in progress moves from one sector to another, resulting in no handover signaling.

According to an embodiment of the present invention, there is a need of using the same time slot for the inter-sector HO terminal. For this purpose, the sectors constituting one cell control the time slot allocation in consideration of the inter-sector HO according to the following time slot allocation rule.

In the time slot allocation rule, each sector allocates the time slot which is not used at other sectors to the terminal with priority.

This rule is applied for time slot allocation to a new user as shown in Table 2. Table 2 shows a time slot allocation rule according to an embodiment of the present invention.

**Table 2**

| Time Slot | #0 | #1 | #2 | #3 | #4 | #5 | #6 | #7 |
|---|---|---|---|---|---|---|---|---|
| Alpha | Allocated | | | | Allocated | | | |
| Beta | | Allocat ed | | | | Allocated | | Allocated |
| Gamma | Allocated | | Allocated | | | Allocated | | |

Table 2 shows the time slots which have been allocated to the respective sectors and, in this case, the time slot allocation is performed in the following order:

Alpha sector : #3 → #6 → #7 → #1 → #2 → #5

Beta sector : #3 → #6 → #0 → #2 → #4

Gamma sector : #3 → #6 → #7 → #1 → #4

When a terminal attempts initial access in the alpha sector, the base station receives an access request message from the terminal through the alpha sector and allocates resources to the terminal as follows.

According to an embodiment of the present invention, the base station operates three sectors with the same MAIO set, i.e. alpha sector with MAIO={0,2,4}, beta sector with MAIO={2,4,0}, and gamma sector with MAIO={4,0,2}. Accordingly, the base station allocates an MAIO identical to that used in the beta and gamma sectors.

As aforementioned, the time slot is allocated according to the time slot allocation rule such that the slot which is not used in other sectors is allocated with priority. In the case of the alpha sector, since the slots #0 and #4 have been allocated already, they are ruled out in the time slot allocation. According to the rule, the time slots #3 and #6 that are not used in both the beta and gamma sectors are allocated with priority and then the time slots #7, #1, and #2 that are used in one of the beta and gamma sectors with next priority. The time slot #5 that is used in both the beta and gamma sectors is considered for allocation last with the lowest priority.

Table 3 shows a time slot allocation rule of according to another embodiment of the present invention.

**Table 3**

| Time Slot | | #0 | #1 | #2 | #3 | #4 | #5 | #6 | #7 |
|---|---|---|---|---|---|---|---|---|---|
| Alpha | TRX#0 | Allocated | | | | Allocated | | | |
| | TRX#1 | | Allocated | | | | | Allocated | |
| Beta | TRX#0 | | Allocated | | | | Allocated | | Allocated |
| Gamma | TRX#1 | Allocated | | Allocated | | | Allocated | | |

Table 3 shows the time slots allocated to the respective sectors in the state where the alpha sector operates with two TRXs and the beta and gamma sectors with one TRX and, in this case, the time slot allocation is performed in the following order. The TRX includes a transmitter(Tx) and a receivier(Rx).

Alpha sector: #3(0) → #4(1) → #6(0) → #7(0,1) → #0(1) → #1(0) → #2(0,1) → #5(0,1)

Beta sector: #3 → #4 → #6 → #2 → #0

Gamma sector: #3 → #4 → #6 → #7 → #1

In a case of handover from the beta sector to the gamma sector, the base station receives a handover request message from the terminal through the beta sector and allocates resources to the terminal as follows.

According to an embodiment of the present invention, the base station operates three sectors with the same MAIO set, i.e. alpha sector with MAIO={0,2,4}, beta sector with MAIO={2,4,0}, and gamma sector with MAIO={4,0,2}. Accordingly, the base station allocates the MAIO used in the beta sector as the serving sector of the terminal to the gamma sector as the target sector.

As aforementioned, the time slot is allocated according to the time allocation rule such that the slot which is not used in other sectors is allocated with priority. Since the time slots #0, #2, and #5 have been allocated in the gamma sector, they area ruled out in the time slot allocation.

According to the rule, the time slot #3 which is not used in both the alpha and beta sectors is allocated with priority and the time slots #4 and #6 which are used in one of the TRXs of the alpha sector with the next priority. Next, time slot #7 which is used in the beta sector is allocated with the next priority and the time slot #1 which is used in both the alpha and beta sectors is allocated with the lowest priority.

As described above, the resource allocation method and apparatus of the present invention is advantageous in preventing a voice break occurring due to the handover latency caused by signaling between the base station and the terminal in the inter-sector handover.

It is to be appreciated that those skilled in the art can change or modify the embodiments without departing the technical concept of this disclosure. Accordingly, it should be understood that above-described embodiments are essentially for illustrative purposes only but not in any way for restriction thereto. Thus the scope of the invention should be determined by the appended claims and their legal equivalents rather than by the specification, and various alterations and modifications within the definition and scope of the claims are included in the claims.

Although certain embodiments of the invention have been described using specific terms, the specification and drawings are to be regarded in an illustrative rather than a restrictive sense in order to help understand the present invention. It is obvious to those skilled in the art that various modifications and changes can be made thereto without departing from the broader spirit and scope of the invention.

## Claims

1. A resource allocation method of a base station in a wireless communication system, the method comprising:
receiving a handover request message from a terminal for handover from a first sector to a second sector within a cell; and
transmitting an allocation message for allocating a Mobile Allocation Index Offset (MAIO) to the terminal, the MAIO being identical to an MAIO used in the first sector.

2. The method of claim 1, wherein the allocation message is a message for allocating at least one time slot that is not used in other sectors of the cell with priority.

3. A resource allocation method of a base station in a wireless communication system, the method comprising:
receiving an initial access request message from a terminal through one sector of a cell; and
transmitting an allocation message for allocating a Mobile Allocation Index Offset (MAIO) to the terminal, the MAIO being identical to an MAIO used in another sector of the cell.

4. The method of claim 3, wherein the allocation message is a message for allocating at least one time slot that is not used in other sectors of the cell with priority.

5. A resource allocation method for a terminal in a wireless communication system, the method comprising:
transmitting, at the terminal, a handover request message to a base station for handover from a first sector to a second sector within a cell; and
receiving an allocation message for allocating a Mobile Allocation Index Offset (MAIO) from the base station, the MAIO being identical to an MAIO used in the first sector.

6. The method of claim 5, wherein the allocation message is a message for allocating at least one time slot that is not used in other sectors of the cell with priority.

7. A resource allocation method for a terminal in a wireless communication system, the method comprising:
transmitting, at the terminal, an initial access request message to a base station through one sector of a cell; and
receiving an allocation message for allocating a Mobile Allocation Index Offset (MAIO) from the base station, the MAIO being identical to an MAIO used in another sector of the cell.

8. The method of claim 7, wherein the allocation message is a message for allocating at least one time slot that is not used in other sectors of the cell with priority.

9. A base station for allocating resources in a wireless communication system, the base station comprising:
a transceiver which transmits and receives data to and from a terminal; and
a controller which controls receiving a handover request message from a terminal for handover from a first sector to a second sector within a cell and transmitting an allocation message for allocating a Mobile Allocation Index Offset (MAIO) to the terminal, the MAIO being identical to an MAIO used in the first sector.

10. The base station of claim 9, wherein the allocation message is a message for allocating at least one time slot that is not used in other sectors of the cell with priority.

11. A base station for allocating resources in a wireless communication system, the base station comprising:
a transceiver which transmits and receives data to and from a terminal; and
a controller which controls receiving an initial access request message from a terminal through one sector of a cell and transmitting an allocation message for allocating a Mobile Allocation Index Offset (MAIO) to the terminal, the MAIO being identical to an MAIO used in another sector of the cell.

12. The base station of claim 11, wherein the allocation message is a message for allocating at least one time slot that is not used in other sectors of the cell with priority.

13. A terminal being allocated resources in a wireless communication system, the terminal comprising:
a transceiver which transmits and receives data to and from a base station; and
a controller which controls transmitting, at the terminal, a handover request message to a base station for handover from a first sector to a second sector within a cell and receiving an allocation message for allocating a Mobile Allocation Index Offset (MAIO) from the base station, the MAIO being identical to an MAIO used in the first sector.

14. The terminal of claim 13, wherein the allocation message is a message for allocating at least one time slot that is not used in other sectors of the cell with priority.

15. A terminal being allocated resources in a wireless communication system, the terminal comprising:
a transceiver which transmits and receives data to and from a base station; and
a controller which controls transmitting, at the terminal, an initial access request message to a base station through one sector of a cell and receiving an allocation message for allocating a Mobile Allocation Index Offset (MAIO) from the base station, the MAIO being identical to an MAIO used in another sector of the cell.
